# EUROPEAN PATENT APPLICATION

(11) **EP 1 814 014 A1**
(43) Date of publication of application: **01.08.2007**
(21) Application number: 06001835.5
(22) Date of filing: 30.01.2006
(51) Int. Cl.: G06F 1/26, H02J 9/06, H02J 7/00

(54) **Multifunctional portable charger**

(71) Applicant: Samya Technology Co., Ltd., Taoyuan City Taoyuan Country 330 (TW)
(72) Inventor: Yang, Fu-I, Taoyuan City Taoyuan Country 330 (TW)
(74) Representative: Casalonga, Axel

(57) **Abstract**

A multifunctional travel charger having a battery compartment (14) formed in a mains adapter (10) for insertion of separable primary/secondary batteries to establish a closed circuit, wherein the mains adapter (10) includes a charging control circuit (13) electrically coupled between the exchange type power conversion unit (12) and the DC power output terminal (17), the battery compartment (14) being electrically coupled to the charging control circuit (13) for obtaining power to charge the secondary battery within the battery compartment (14); and a DC booster control (16) circuit electrically coupled between the battery compartment (14) and the DC power output terminal (17) for boosting the DC voltage obtained from the primary/secondary batteries so as to provide the electronic products with required voltage via the DC power output terminal (17). In this way, the invention can serve as a conventional travel charger, a secondary battery charger, an uninterruptible charger, and an emergency power supply, thereby combining four functions in one unit.

## Description

The invention relates to a multifunctional travel charger, and more particularly to a travel charger that can serve as both a charger of secondary batteries and an uninterruptible charger in addition to the original voltage-transforming and rectifying functions of a conventional travel charger. Meanwhile, the travel charger can serves as an emergency power supply in combination with primary batteries. Accordingly, the travel charger in accordance with the invention can achieve the multifunctional effect.

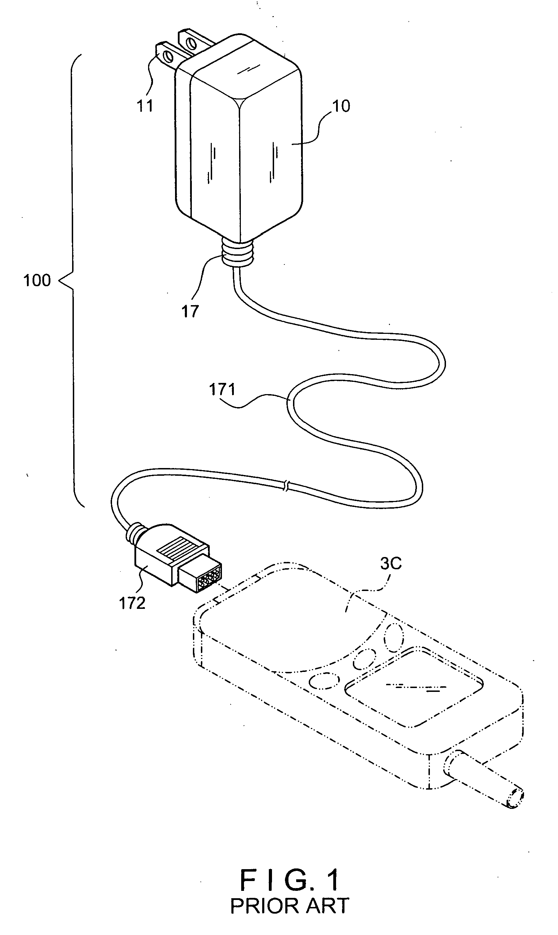

The conventional 3C electronic products like mobile phones, MP3, PDAs and digital cameras, etc., have a corresponding travel charger 100, as shown in FIG. 1. The travel charger 100 includes a mains adapter 10 and a mains plug 11. The mains plug 11 has two metal blades for inserting into a mains socket (not shown) and obtaining AC or DC power. Thereafter, the obtained power passes through a DC power output terminal 17 and a charging connection cable 171 for providing the electronic products 3C with required DC power.

The common DC power for 3C electronic products has a voltage between 4.5V~9V. Generally, the travel charger 100 has to obtain power from mains socket or DC power socket. Otherwise, the travel charger 100 does not work. Even, the problem of signal interruption or data loss can arise when a 3G mobile phone receives video information and has no emergency power supply in case of the power exhaustion. This causes the operator much trouble or even great loss.

Moreover, the mains plug 11 has been secured to the aforementioned travel charger 100 before leaving factory. As shown in FIG. 1, the mains plug 11 includes two metal blades. However, the mains socket has different specifications in different countries. When one travels abroad and forgets to take a proper interconnection part with him, the travel charger 100 does not work as well. In addition, the specification of the charging connector 172 of the travel charger 100 is adjusted to each specific product in leaving factory. As a result, it is not easy to find a corresponding charging connector 172 if the user goes for a business trip and forget to take it with him. This is also troublesome.

Taking the shortcomings of the above-mentioned travel charger into account, which cannot satisfy the current demands, the invention focuses on research and innovation to settle the above-mentioned problems.

A primary object of the invention to provide a multifunctional travel charger that is based on a conventional mains adapter having voltage-transforming as well as rectifying functions and includes a battery compartment for charging at least one secondary battery.

Another object of the present invention to provide a multifunctional travel charger whose battery compartment is used to receive and charge the secondary batteries, thereby forming an uninterruptible charging unit for providing the electronic products with a continuous charging process.

A further object of the present invention to provide a multifunctional travel charger whose battery compartment can receive primary batteries like alkaline batteries at any time, thereby forming an emergency power supply for providing required DC power at any time when the user is outside.

In order to reach the above-mentioned objects, a multifunctional travel charger is based on a mains adapter having a mains plug and an exchange type power conversion unit. The mains adapter is adapted to transform and rectify the power obtained via the mains plug for providing the electronic products with required DC power via a DC power output terminal.

The battery compartment is formed in the mains adapter for insertion of separable primary/secondary batteries to establish a closed circuit, wherein the mains adapter includes:
a) a charging control circuit electrically coupled between the exchange type power conversion unit and the DC power output terminal, the battery compartment being electrically coupled to the charging control circuit for obtaining power to charge the secondary battery within the battery compartment; and
b) a DC booster control circuit electrically coupled between the battery compartment and the DC power output terminal for boosting the DC voltage obtained from the primary/secondary batteries so as to provide the electronic products with required voltage via the DC power output terminal.

The battery compartment is formed as an open type groove. In addition, the battery compartment 14 is provided with a cover. Alternatively, the battery compartment is formed in such a way that the separable batteries are introduced in the lateral direction.

Furthermore, the battery compartment includes a charging connection cable and a USB output port within the mains adapter.

Based on the aforementioned features, the travel charger in accordance with the invention can serve as a conventional travel charger, a secondary battery charger, an uninterruptible charger, and an emergency power supply, thereby fulfilling four-in-one functions without increase of its volume.
FIG. 1 is a perspective view of a conventional travel charger;
FIG. 2 is a perspective view of a preferred embodiment of the invention;
FIG. 3 is a circuit block diagram of the preferred embodiment of the invention;
FIG. 4 is a schematic drawing of the internal structure of the preferred embodiment of the invention;
FIG. 4A through 4D are schematic drawings of charging loops in accordance with the invention in different operational status;
FIG. 5 is a side view of another embodiment of the invention;
FIG. 6 is a side view of a further embodiment of the invention;
FIG. 7 is a side view of still another embodiment of the invention;
FIG. 8 is a perspective view of a still further embodiment of the invention; and
FIG. 9A and 9B are schematic drawings of yet another embodiment of the invention for charging a lithium battery.

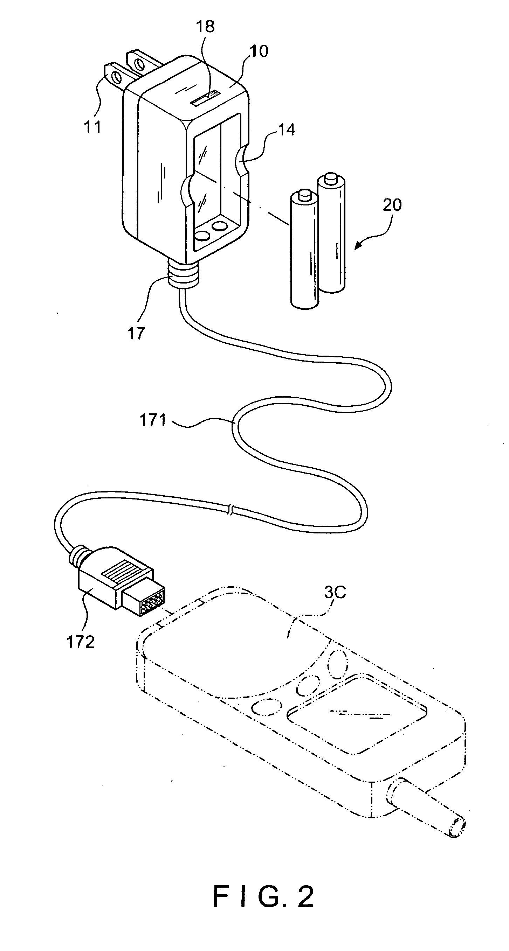

Referring to FIGS. 2 through 4, a travel charger in accordance with a preferred embodiment of the present invention is based on a conventional mains adapter 10 that is provided with a compartment 14 and a conducting terminal 142 installed within the compartment 14. In this way, several separable batteries 20 can be fitted into the compartment 14 for establishing contact to the conducting terminal 142. FIG. 2 shows a perspective view of an open type battery compartment 14 in which two batteries 20 are received for charging. This should not be restricted thereto. In other words, the battery compartment 14 can be formed in such a way that only one battery 20 is received. Moreover, the battery 20 can be selected from a group consisting of rechargeable secondary battery 20b and unrechargeable primary battery 20a.

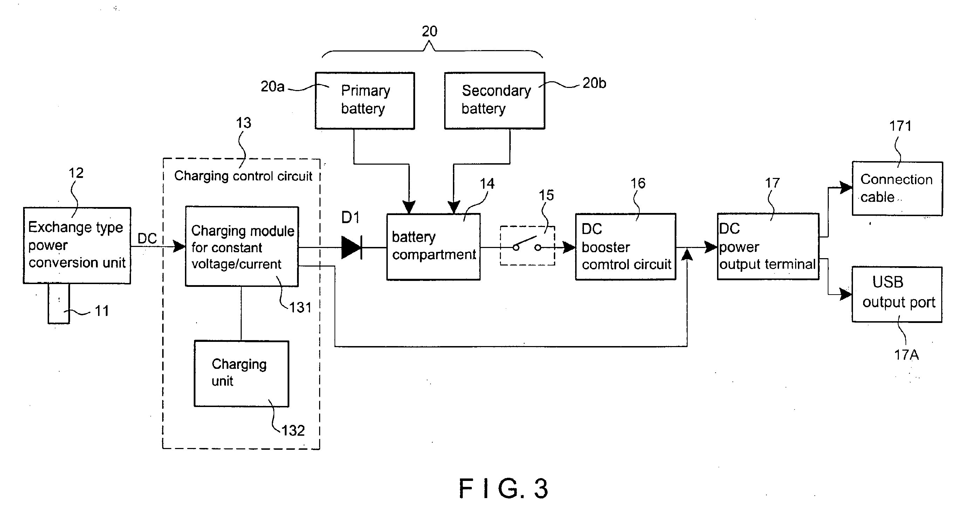

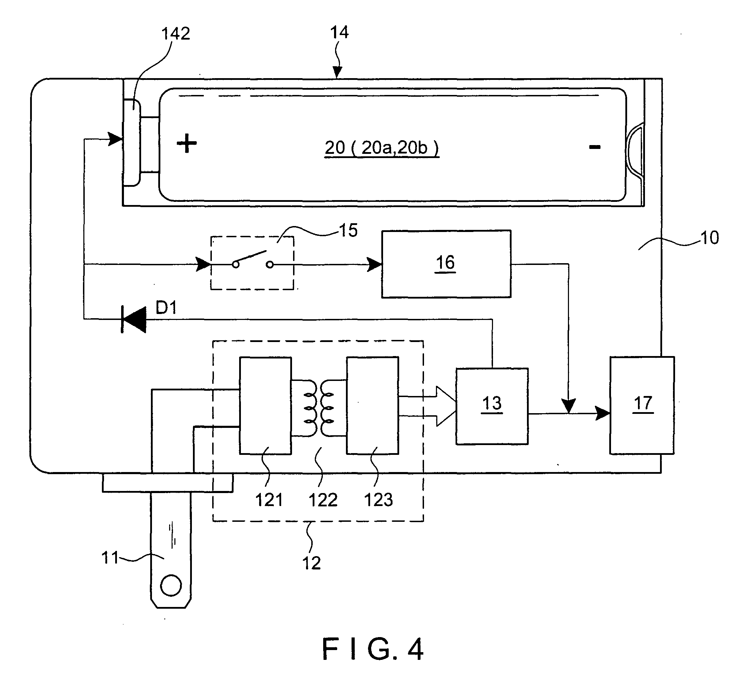

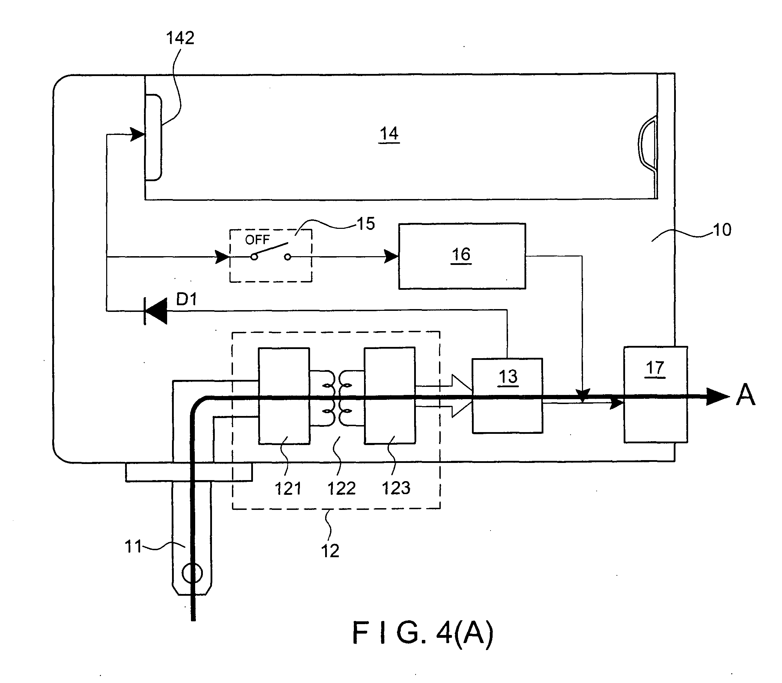

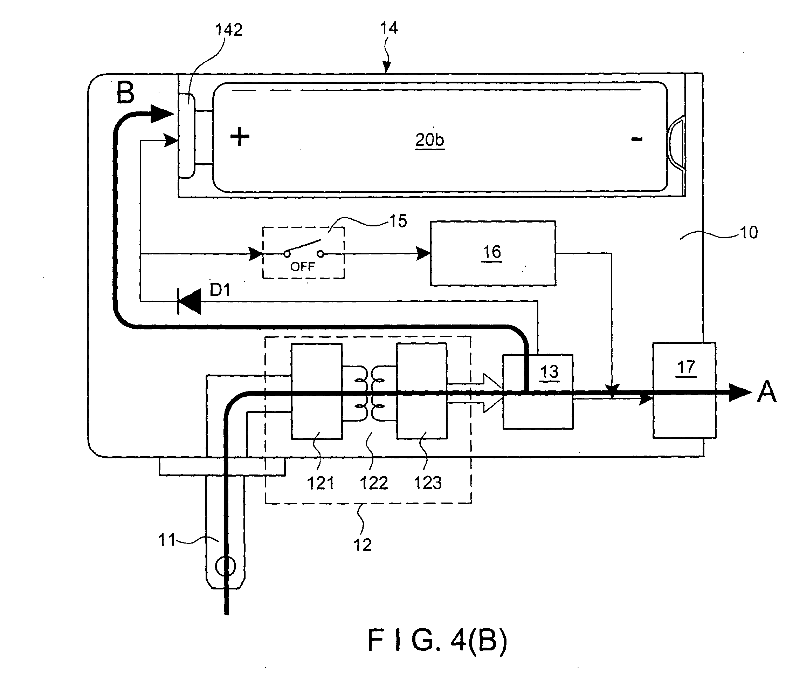

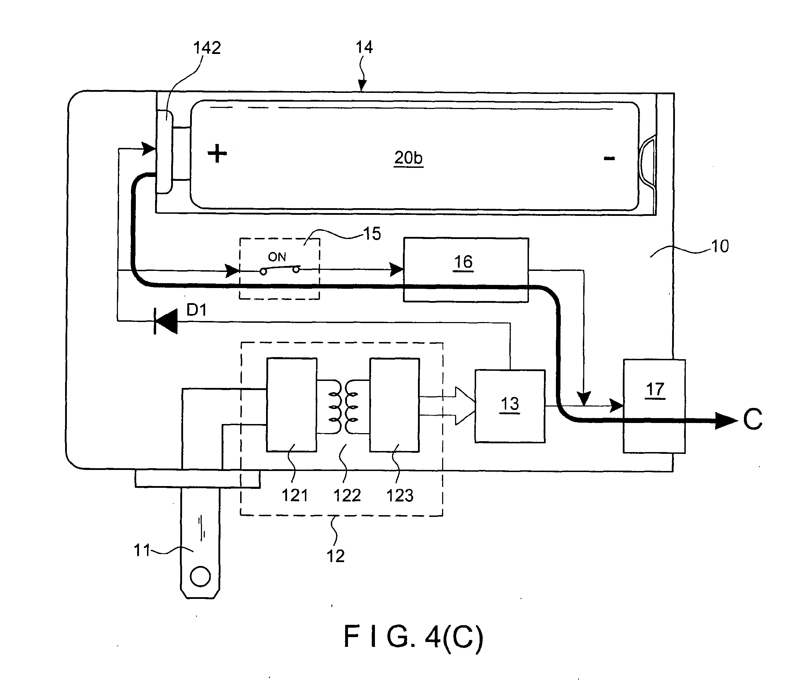

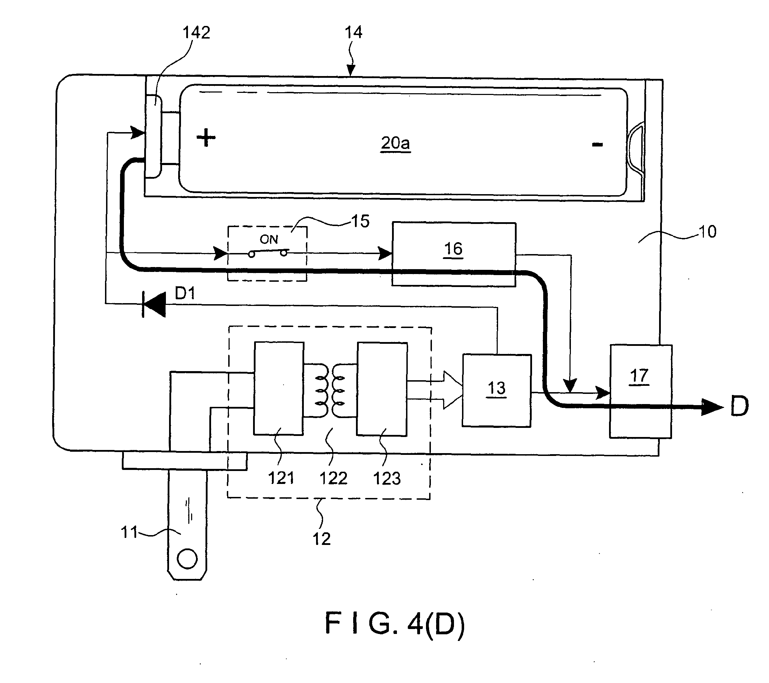

As shown in FIGS. 3and 4, the mains adapter 10 includes a mains plug 11 and an exchange type power conversion unit 12. The power conversion unit 12 within the mains adapter 10 mainly includes an input circuit 121 coupled to the mains plug 11, a voltage-transforming unit 122 and a rectifying circuit 123. As shown in FIG. 4A, the charging power obtained via the mains plug 11 will be transformed and rectified, and then flows to a DC power output terminal 17, thereby defining a direct charging loop A that is required by the electronic products. This refers to the function of the conventional travel charger. At this point, no batteries are received within the battery compartment 14. If the secondary batteries 20b are positioned in the battery compartment 14, a charging control circuit 13 will create another charging loop BB relative to the battery compartment 14 as shown in FIG. 4.

The exchange type power conversion unit 12 belongs to the prior art and is the existing component of the mains adapter 10. The exchange type power conversion unit 12 is selected from a group consisting of AC-to-DC type and DC-to-DC type power conversion units. This is not the object of the present invention so that no further descriptions thereto are given hereinafter.

The invention is characterized in that the mains adapter 10 includes a battery compartment 14 that contains a charging control circuit 13 and a DC booster control circuit 16. The charging control circuit 13 between the exchange type power conversion unit 12 and the DC power output terminal 17 obtains the charging power for charging the rechargeable secondary battery 20b within the battery compartment 14 (see FIG. 4B). The rechargeable secondary battery 20b preferably includes the Ni-MH batteries in size of AA or AAA. However, they should not be restricted thereto. In other words, the battery compartment 14 can be solely used as charger of the secondary batteries 20b. The fully charged secondary batteries 20b can be removed from the battery compartment 14 and used as batteries for 3C products. If they remain in the battery compartment 14 and the power is disconnected due to e.g. power failure or removal of the plug from the mains socket, the charging control circuit 13 stops the power supply process. At this point, a switching circuit 15 between the battery compartment 14 and the DC booster control circuit 16 can be automatically or manually transited to on state, as shown in FIG. 4C, such that the secondary batteries 20b within the battery compartment 14 begin the discharging process. Since a one-way electronic element D1 like diode is interposed between the battery compartment 14 and the charging control circuit 13, an uninterruptible charging loop C passes through the DC booster control circuit 16. Two pieces of the AA or AAA NiH batteries provides an output voltage of 3V (1.5 x 2) that does not meet the voltage requirement of 4.5 ~ 9 V DC of the common 3C products. Therefore, a DC booster control circuit 16 is interposed between the battery compartment 14 and the DC power output terminal 17 for rapidly boosting the voltage from 4.5V to 9V when low voltage and large current arise in the discharging process of the secondary battery 20b. This can ensure a continuous charging process for the electronic product. Accordingly, the travel charger in accordance with the invention can be used as an uninterruptible charger as well.

Furthermore, when the travel charger of the invention is carried outside and no mains socket is available for obtaining power, a primary battery 20a like alkaline battery easily available in a shop nearby can be placed into the battery compartment 14. Two pieces of them provides only a voltage of 3V. Thus, the DC booster control circuit 16 is required for boosting the voltage to 4.5 V ~ 9 V. In this way, the DC power output terminal 17 can provide the electronic product with an emergency charging loop D. By use of the primary battery 20a, the travel charger in accordance with the invention can be easily converted into an emergency power supply for convenient use.

The detailed electronic circuit diagram of the charging control circuit 13 and the DC booster control circuit 16 belongs to prior art circuit design. Since they are not the objects of the invention, no further descriptions are given hereinafter. The charging control circuit 13, as shown in FIG. 3, includes a charging module 131 for constant voltage/current and a charging unit 132. By use of the connection between the charging module 131 for constant voltage/current and the charging unit 132, the power obtained by the exchange type power conversion unit 12 can be employed to charge the batteries within the battery compartment 14 with a predetermined voltage/current without any problems. Meanwhile, the DC power output terminal 17 can provide the electronic product with the required charging power.

Accordingly, the travel charger in accordance with the invention combines both circuits 13, 16 with the battery compartment 14. Meanwhile, they are installed within the mains adapter 10. In this way, the travel charger of the invention can serve as a charger for the secondary batteries and an uninterruptible charger in addition to the original voltage-transforming and rectifying functions of the mains adapter 10 of the travel charger. Meanwhile, the travel charger of the invention can also be used as emergency power charger in combination with the primary battery. Thus, the travel charger of the invention combines four functions in one device for a convenient and practical use. Besides, the four-in-one multifunctional charger is dimensioned as big as the commercially available mains adapter 10 such that an easy carrying can be achieved.

Furthermore, the switching circuit 15 is interposed between the battery compartment 14 and the DC booster control circuit 16 while the charging control circuit 13 is selected from a group consisting of a manual control switching circuit and an automatic control switching circuit. For the manual control, as shown in FIG. 2, a control element 18 selected from a group consisting of a slide switch or a push-button switch is mounted on the mains adapter 10. Thus, a desired function can be selected by use of the control element 18. According to the priority preset in the control circuit, the automatic control switching circuit determines by which loop is provided the DC power output terminal 17 with the power. Moreover, an electronic element like MOSFET can be employed as the control element in the automatic control switching circuit to achieve the automatic switching effect. This won't be described any more hereinafter.

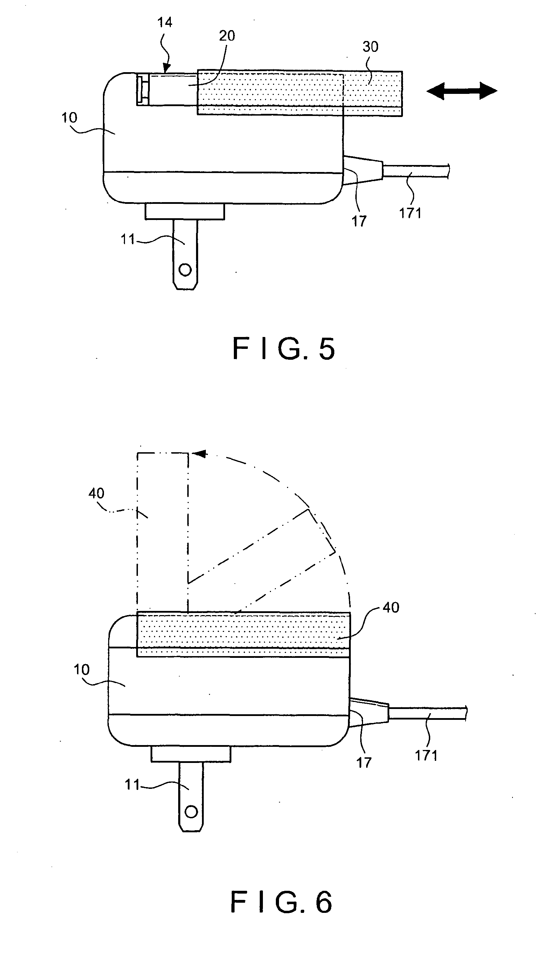

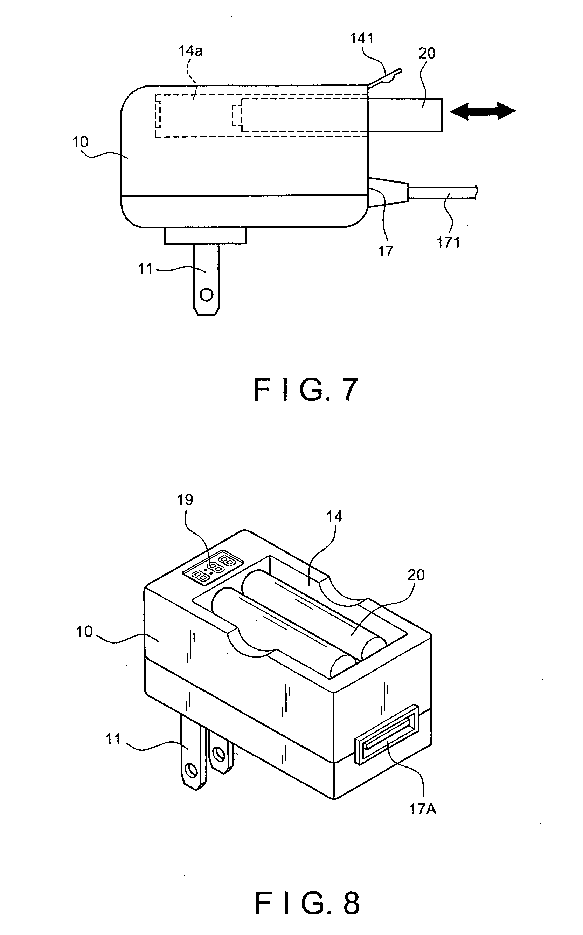

The battery compartment 14 in accordance with the aforementioned embodiment of the invention is shown in an open state. However, it should not be restricted thereto. As shown in FIG. 5, a slide cover 30 is mounted on the battery compartment 14. In FIG. 6, a hinged cover 40 is illustrated. Alternatively, the battery compartment 14 is formed in such a way that the separable batteries 20 are introduced in axial direction, as shown in FIG. 7. Meanwhile, a flap 141 is disposed at the opening of the compartment. In this way, the batteries 20 can be placed into the compartment 14a in a pushing manner for convenience in charging.

FIG. 8 shows another embodiment of the invention. The internal structure of the embodiment according to FIG. 8 is identical with that of the aforementioned embodiments. However, the embodiment according to FIG. 8 differs from the aforementioned embodiments in that a USB output port 17A instead of the DC power output terminal is applied to the mains adapter 10. In this way, the mains adapter 10 can be utilized for charging an electronic product with a USB connector. In addition, a display unit 19 like small type LCD display panel can be mounted on the mains adapter 10 for indicating the operation status. Of course, the display unit 19 can include the element of light-emitting diode, and this is not described any more hereinafter.

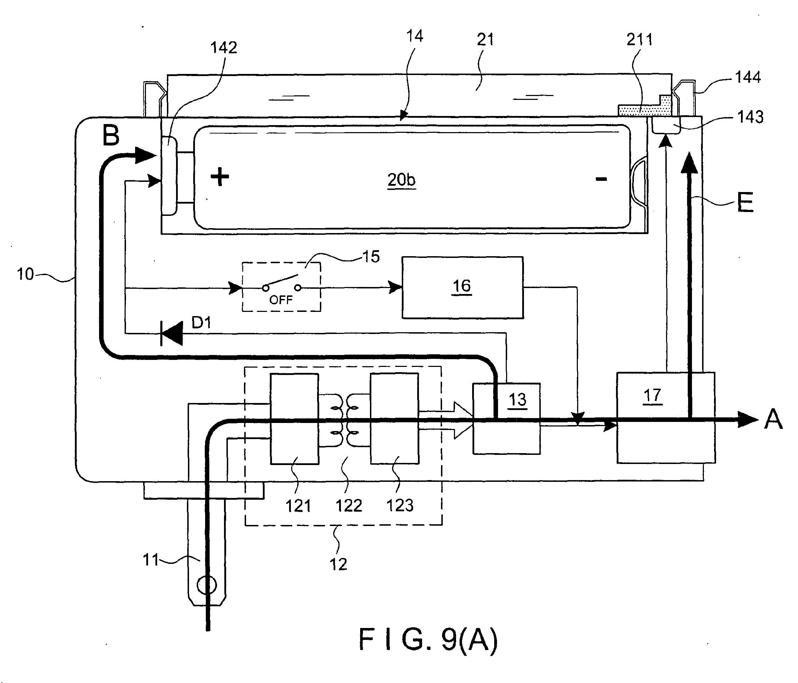

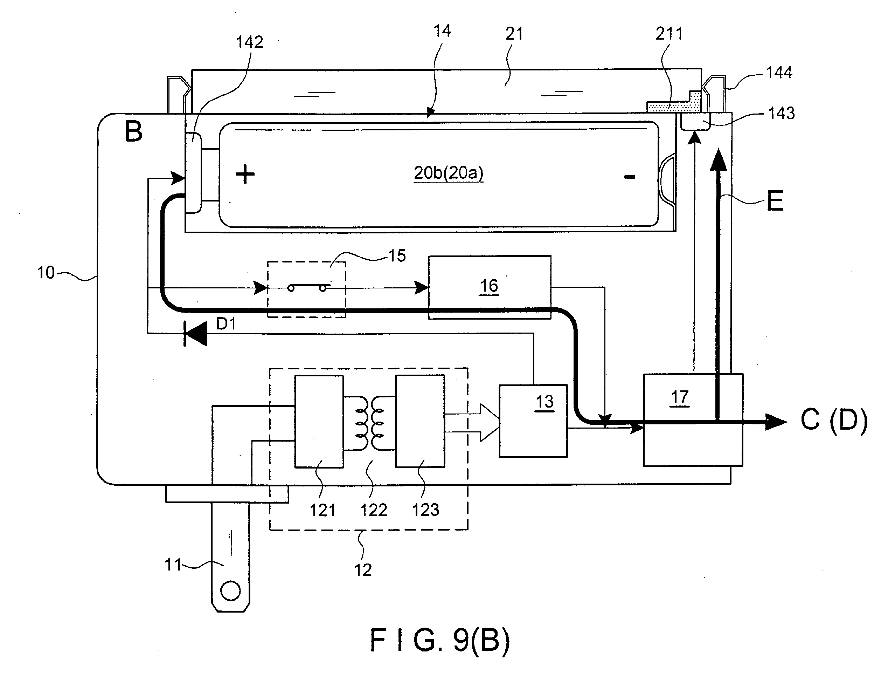

Based on the above-mentioned features, as shown in FIG. 9A, the charging power can supplied via the DC power output terminal 17 to the electronic product. As shown in FIG. 2, a digital camera or mobile phone 3C is charged via a connection cable 171. However, some mobile phone has a standby lithium battery 21. For the charging purpose, the mains adapter 10 further includes a lithium battery charging terminal 143 and a lithium battery positioning body 144. The lithium battery positioning body 144 involves a groove or several positioning pieces, and is preferably disposed at the top of the battery compartment 14. When the lithium battery 21 is placed into the lithium battery positioning body 144, a charging interface 211 establishes contact with the charging terminal 143. Thus, the lithium battery 21 can be simultaneously charged by a charging loop E defined by the above-mentioned elements in addition that the mobile phone is charged by the charging loop A that starts at the DC power output terminal 17 and flows through the connection cable 171 to the mobile phone, and the secondary battery 20b within the battery compartment 14 is charged by the charging loop B. In fact, the lithium battery 21 is one of the secondary batteries. Therefore, the travel charger of the invention can be used to charge both the lithium battery 21 and the Ni-MH secondary battery.

Referring to FIG. 9B, the fully charged secondary battery 20b or the primary battery 20a can be placed into the battery compartment 14 when the input power is disconnected. Then, the charging power provided by the batteries 20a, 20b flows through the uninterruptible charging loop C or the emergency charging loop D to the DC power output terminal 17. Meanwhile, the charging power can also flow through the charging loop E to charge the standby lithium battery 21. Accordingly, the travel charger of the invention can serve as the uninterruptible and emergency power supply for the lithium battery 21, too. This ensures a more convenient application.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. A multifunctional travel charger, based on a mains adapter (10) having a mains plug (11) and an exchange type power conversion unit (12), the mains adapter being adapted to transform and rectify the power obtained via the mains plug for providing the electronic products with required DC power via a DC power output terminal,
wherein a battery compartment (14) is formed in the mains adapter (10) for insertion of separable primary/secondary batteries (20a)/(20b) to establish a closed circuit; and
wherein the mains adapter includes:
a) a charging control circuit (13) electrically coupled between the exchange type power conversion unit (12) and the DC power output terminal (17), the battery compartment (14) being electrically coupled to the charging control circuit (13) for obtaining power to charge the secondary battery (20b) within the battery compartment (14); and
b) a DC booster control circuit (16) electrically coupled between the battery compartment (14) and the DC power output terminal (17) for boosting the DC voltage obtained from the primary/secondary batteries (20a)/(20b) so as to provide the electronic products with required voltage via the DC power output terminal (17).

2. The travel charger as recited in claim 1 wherein a switching circuit (15) coupled between the battery compartment (14) and the DC booster control circuit (16) is selected from a group consisting of a manual control switching circuit and an automatic control switching circuit, and wherein a one-way electronic element is coupled between the battery compartment (14) and the charging control circuit (13).

3. The travel charger as recited in claim 2 wherein the manual control switching circuit includes a control element (18) defined by a switching/pressure switch on the mains adapter (10).

4. The travel charger as recited in claim 1 wherein the battery compartment (14) is an open type groove.

5. The travel charger as recited in claim 4 wherein the battery compartment (14) includes a slide/hinged cover (30)/(40).

6. The travel charger as recited in claim 1 wherein the battery compartment (14) is formed in such a way that the separable batteries are introduced in the lateral direction, and wherein a flap (141) is disposed at the opening of the compartment.

7. The travel charger as recited in claim 1 wherein the exchange type power conversion unit (12) is selected from a group consisting of AC-to-DC type and DC-to-DC type power conversion units.

8. The travel charger as recited in claim 1 wherein the charging control circuit (13) includes a charging unit (132) and a charging module (131) for constant voltage/current.

9. The travel charger as recited in claim 1 wherein the DC power output terminal (17) of the mains adapter (10) is selected from a group consisting of a charging connection cable (171) and a USB output port (17A).

10. The travel charger as recited in claim 1 wherein the mains adapter (10) further includes a lithium battery charging terminal (143) and a lithium battery positioning body (144), and wherein the lithium battery charging terminal (143) is electrically coupled to the DC power output terminal (17) for obtaining power to charge the lithium batteries (21).
